# EUROPÄISCHE PATENTSCHRIFT

(11) **EP 3 904 707 B1**
(45) Veröffentlichungstag und Bekanntmachung des Hinweises auf die Patenterteilung: **17.01.2024**
(21) Anmeldenummer: 21160968.0
(22) Anmeldetag: 05.03.2021
(51) Int. Cl.: F16B 37/06, F16B 19/08

(54) **SELBSTSTANZENDES FUNKTIONSELEMENT**
SELF-PIERCING FUNCTION ELEMENT
ÉLÉMENT FONCTIONNEL D'AUTOPERÇANT

(30) Priorität: 29.04.2020 DE 102020111696
(43) Veröffentlichungstag der Anmeldung: 03.11.2021
(73) Patentinhaber: Profil Verbindungstechnik GmbH & Co. KG, 61381 Friedrichsdorf (DE)
(72) Erfinder: DIEHL, Oliver, 61250 Usingen (DE); JENE, Tobias, 61381 Friedrichsdorf (DE); MAHLME, Amer, 61352 Bad Homburg (DE); SOWA, Christian, 63165 Mühlheim/Main (DE)
(74) Vertreter: Manitz Finsterwald Patent- und Rechtsanwaltspartnerschaft mbB

(56) Entgegenhaltungen:
- DE-A1- 19 710 246
- DE-A1-102005 001 461
- US-A- 5 549 430
- US-A1- 2013 223 950

## Beschreibung

Die vorliegende Erfindung betrifft ein selbststanzendes Funktionselement, das zum Einstanzen in ein Werkstück, insbesondere in ein Blechteil, ausgelegt ist. Das Element umfasst ein einen Flansch bildenden Kopfteil und einen sich von dem Kopfteil weg erstreckenden und insbesondere koaxial zu einer mittleren Längsachse des Funktionselements angeordneten Stanzabschnitt mit einer umlaufenden Stanzkante.

Auf dem Gebiet der Verbindungselemente bzw. Funktionselemente, die bei der Anfertigung von Werkstücken, wie etwa Blechteilen, an diesen maschinell angebracht werden, unterscheidet man zwischen Einpresselementen einerseits und Nietelementen andererseits. Einpresselemente zeichnen sich dadurch aus, dass sie bei Anbringung an ein Werkstück zumindest nicht absichtlich verformt werden, sondern das Werkstück wird verformt und in Eingriff mit Formmerkmalen des Einpresselementes gebracht, wodurch das Einpresselement auspresssicher am Blechteil befestigt wird. Bei Nietelementen wird das Element bei der Anbringung am Blechteil absichtlich verformt, meistens um ein Nietbördel auszubilden, wodurch das Blechteil zwischen dem Nietbördel und einem Flanschteil eingefangen wird, um auch hier eine auspresssichere Verbindung zu erreichen.

Sowohl Einpresselemente als auch Nietelemente kennt man ferner als selbststanzende Elemente. Die Bezeichnung selbststanzend ist so zu verstehen, dass das entsprechende Element in Zuge des Befestigungsprozesses sein eigenes Loch in das Werkstück stanzt. Die dafür erforderliche Kraft wird beispielsweise von einer Presse, von einem Roboter oder einer kraftbetätigten Zange erzeugt. Dabei wird das selbststanzende Element gegen das Werkstück gepresst, während dieses auf der dem Element abgewandten Seite auf eine entsprechende Matrize abgestützt wird. Selbststanzende Elemente sind mit Kostenvorteilen verbunden, da das Werkstück nicht vorgelocht werden muss.

Funktionselemente der vorstehend beschriebenen Art finden unter anderem - aber bei weitem nicht nur - im Automobilbau Anwendung. Mit der Ausweitung der Einsatzgebiete solcher Funktionselemente steigen auch die Anforderungen, denen sie zu genügen haben.

Die US 2013/0223950 A1 offenbart ein Funktionselement mit den Merkmalen des Oberbegriffs des Anspruchs 1. Die DE 197 10 246 A1, US 5,549,430 A und die DE 10 2005 001 461 A1 beschreiben weitere Beispiele von Funktionselementen.

Es besteht daher ein Bedarf nach selbststanzenden Funktionselementen, die sich auf einfache Weise zuverlässig an einem Werkstück befestigen lassen und die hohen Auspress- oder Zugkräften sowie Drehmomenten gewachsen sind.

Mit der vorliegenden Erfindung wird ein solches Funktionselement bereitgestellt. Erfindungsgemäß ist vorgesehen, dass das Kopfteil eine den Stanzabschnitt radial außenseitig zumindest abschnittsweise umgebende Anlagefläche zur Anlage an dem Werkstück und einen die Anlagefläche radial außenseitig zumindest abschnittsweise begrenzenden Begrenzungsabschnitt aufweist, der sich in der gleichen Richtung wie der Stanzabschnitt von der Anlagefläche weg erstreckt. Insbesondere ist der Begrenzungsabschnitt in Umfangsrichtung durchgehend. Eine dem Stanzabschnitt zugewandte Innenwand des Begrenzungsabschnitts und eine dem Begrenzungsabschnitt zugewandte Außenwand des Stanzabschnitts sind zumindest abschnittsweise schräg zur Längsachse des Funktionselements angeordnet, so dass die Innenwand und die Außenwand in zumindest einer die Längsachse enthaltenden Ebene jeweils eine Hinterschneidung bilden.

Die Innenwand, die Anlagefläche und die Außenwand bilden gleichsam einen Ringraum, der aufgrund der bezüglich der Längsachse zumindest abschnittsweise schräg angeordneten Innenwand und Außenwand Hinterschneidungen aufweist und daher zur Ausbildung eines Formschlusses mit dem Material des Werkstücks geeignet ist, das bei dem Befestigungsprozess in den Ringraum gepresst wird.

Unter dem Begriff "schräg" ist in diesem Zusammenhang auch eine zumindest abschnittsweise gekrümmte Ausgestaltung der genannten Wände zu verstehen. Durch die zumindest abschnittsweise vorgesehenen Hinterschneidungen sowohl an der Innenwand als auch an der Außenwand wird eine besonders gute Widerstandfähigkeit gegen ein Auspressen oder Ausziehen des Elements erreicht. Die Hinterschneidungen müssen nicht zwingend in Umfangsrichtung durchgehend sein. Es kann in vielen Anwendungsbeispielen ausreichend sein, wenn zumindest jeweils ein Umfangssegment der Außenwand und der Innenwand jeweils eine Hinterschneidung bildet. Insbesondere liegen die beiden Umfangssegmente in radialer Richtung gesehen einander gegenüber.

Bevorzugt weist die Außenwand eine in Umfangsrichtung durchgehende Hinterschneidung auf, während die Innenwand mehrere, insbesondere gleichmäßig verteilte Hinterschneidungssegmente aufweist.

Weitere Ausführungsformen der Erfindung sind in der Beschreibung, den Zeichnungen und den Ansprüchen angegeben.

Gemäß einer Ausführungsform weist die Innenwand in einer axialen Stirnansicht eine polygonale Kontur auf, was eine verbesserte Verdrehsicherung des Elements bewirkt. D.h. ein befestigtes Element vermag größeren Drehmomenten zu widerstehen, da ein in Umfangsrichtung wirkender Formschluss zwischen dem Werkstück und dem Element herstellbar ist.

Eine Verbesserung der Verdrehsicherung wird auch erzielt, wenn der Begrenzungsabschnitt eine dem Werkstück zugewandte axiale Endfläche aufweist, deren Innenkante und/oder Außenkante in einer axialen Stirnansicht eine polygonale Kontur aufweisen.

Der Begrenzungsabschnitt kann eine dem Werkstück zugewandte axiale Endfläche aufweisen, deren Ebene zwischen einer durch die Anlagefläche aufgespannten Ebene und einer durch die Stanzkante aufgespannten Ebene liegt. Insbesondere sind die drei Ebenen parallel zueinander angeordnet.

Bevorzugt weisen das Kopfteil und/oder der Stanzabschnitt in axialer Richtung betrachtet - d.h. in einer Ebene senkrecht zur Längsachse gesehen - eine kreisförmige Grundform auf. Abweichende Grundformen sind jedoch auch denkbar, etwa eine ovale, rechteckige oder polygonale Grundform. Insbesondere weisen die Stanzkante und/oder die Außenwand des Stanzabschnitts in einer axialen Stirnansicht eine polygonale Kontur auf. In besondere Anwendungsfälle kann es vorteilhaft sein, wenn das Kopfteil und der Stanzabschnitt unterschiedliche Grundformen aufweisen.

Der vorstehend erläuterte, große geometrische Gestaltungsspielraum der Innen- und der Außenwand sowie der Stanz-, Innen- und Außenkante hat zur Folge, dass der Ringraum eine komplexe Formgebung aufweisen kann. Der Bedeutungsgehalt dieses Begriffs ist im Kontext der vorliegenden Erfindung daher nicht allein auf einen kreisförmigen Ring zu verengen.

Zur weiteren Verbesserung der Verdrehsicherheit können die Außenwand und/oder die Innenwand und/oder die Anlagefläche und/oder die axiale Endfläche mit zumindest einem Verdrehsicherungsmerkmal versehen sein, insbesondere mit zumindest einer sich in axialer und/oder radialer Richtung erstreckender Erhebung und/oder Vertiefung. Die Anzahl, Positionierung und Form der Merkmale können bedarfsgerecht gewählt werden.

Erfindungsgemäß erstreckt sich von der Innenwand in radialer Richtung zu dem Stanzabschnitt hin zumindest eine Rippe, die sich in axialer Richtung von der Anlagefläche weg erstreckt, wobei die axiale Erstreckung der Rippe von außen nach innen abnimmt. Die Rippe kann sich bis zu dem Stanzabschnitt erstrecken. Es ist aber auch möglich, dass die Rippe nur einen Teil des Abstands zwischen dem Begrenzungsabschnitt und dem Stanzabschnitt bzw. des Ringraums überspannt (beispielsweise weniger als 80%, weniger als 70%, weniger als 60%, jedenfalls mehr als 50% des Abstands). Die Stirnfläche der Rippe kann eine abgerundete Form aufweisen, um deren Kerbwirkung zu minimieren und damit den Ermüdungswiderstand des Werkstücks im Bereich des Elements nicht herabzusetzen.

Ferner erstreckt sich von der Außenwand in radialer Richtung zu dem Begrenzungsabschnitt hin zumindest ein Sockel, der sich in axialer Richtung von der Anlagefläche weg erstreckt. Der Sockel kann sich bis zu dem Begrenzungsabschnitt erstrecken. Es ist aber auch möglich, dass der Sockel nur einen Teil des Abstands zwischen dem Begrenzungsabschnitt und dem Stanzabschnitt bzw. des Ringraums überspannt (beispielsweise weniger als 80%, weniger als 70%, weniger als 60%, jedenfalls mehr als 50% des Abstands). Der Sockel kann eine im Wesentlichen ebene Stirnfläche aufweisen, die senkrecht oder geneigt zur Längsachse angeordnet ist. Der Sockel dient nicht nur zur Verbesserung der Verdrehsicherung, sondern unterstützt auch die Verdrängung und Verteilung des bei dem Befestigungsprozess in den Ringraum gepressten Materials des Werkstücks. Eine vorteilhafte Folge ist unter anderem die Verbesserung der Dichtigkeit der Verbindung zwischen dem Element und dem Werkstück.

Es sind mehrere in Umfangsrichtung gleichmäßig verteilt angeordnete Rippen und Sockel vorgesehen, die versetzt zueinander angeordnet sind. Eine alternierende Anordnung von Rippen und Sockeln, die sich bevorzugt in radialer Richtung überlappen, liefert besonders gute Resultate hinsichtlich einer Zuverlässigkeit und Dichtigkeit der Verbindung zwischen dem Element und dem Werkstück.

Gemäß einer Ausführungsform ist das Funktionselement ein Mutterelement, das eine Bohrung mit einem Innengewinde aufweist. Das Funktionselement kann auch ein Bolzenelement sein, das einen sich auf der dem Stanzabschnitt abgewandten Seite von dem Kopfteil erstreckenden Bolzenabschnitt aufweist, insbesondere wobei der Bolzenabschnitt zumindest abschnittweise mit einem Außengewinde versehen ist.

Die vorliegende Erfindung betrifft ferner ein Zusammenbauteil umfassend ein Funktionselement gemäß zumindest einer der vorstehend beschriebenen Ausführungsformen und ein Werkstück, insbesondere ein Blechteil, wobei das Werkstück in einem Bereich um ein durch den Stanzabschnitt ausgestanztes Loch zumindest teilweise in einen durch die Innenwand, die Anlagefläche und die Außenwand gebildeten Ringraum und in die Hinterschneidungen gedrängt ist, so dass das Funktionselement formschlüssig mit dem Werkstück verbunden ist.

Gemäß einer Ausführungsform des Zusammenbauteils ist eine der Anlagefläche abgewandte Seite des Werkstücks in einem Bereich benachbart zu dem Loch oder direkt angrenzend an das Loch mit einer in Umfangsrichtung durchgehenden oder segmentierten Vertiefung, insbesondere Ringvertiefung versehen. Insbesondere ist das Material des Werkstücks im Bereich der Vertiefung zumindest teilweise in dem Ringraum angeordnet. Bevorzugt ist die geometrische Grundform der Vertiefung komplementär zu der des Ringraums ausgebildet. Sie kann aber auch davon abweichen. Insbesondere ist die Vertiefung rotationssymmetrisch.

Die Vertiefung kann im Zuge des Befestigungsvorgangs des Elements an dem Werkstück erzeugt werden, z.B. durch eine Matrize, die Material des Werkstücks, das an das durch den Stanzabschnitt erzeugte Loch angrenzt, in den Ringraum presst.

Bei der Herstellung des Zusammenbauteils ist das Element auf die Dicke und Ausgestaltung des Werkstücks im Bereich des zu erzeugenden Lochs abzustimmen. Die Länge des Stanzabschnitts, also dessen axiale Erstreckung von dem Kopfteil, ist in vielen Fällen vorteilhafterweise kleiner als die Tiefe der Vertiefung. Mit anderen Worten ist bei dieser Ausführungsform des Zusammenbauteils eine axiale Erstreckung des Stanzabschnitts derart gewählt, dass dieser nicht aus der Vertiefung herausragt, um ein möglichst kompaktes Zusammenbauteil zu erhalten. So ist u.a. sicher gestellt, dass eine planare Befestigungsebene auf der dem Kopfteil des Funktionselements abgewandten Seite des Werkstücks vorliegt.

Es kann auch vorgesehen sein, dass die Dicke des Werkstücks im Bereich des Lochs im Wesentlichen der axialen Erstreckung des Stanzabschnitts entspricht oder kleiner ist, um das Stanzen des Lochs zu vereinfachen. Es ist aber auch möglich, dass das Werkstück eine Dicke aufweist, die größer ist als die axiale Erstreckung des Stanzabschnitts.

Weist das Funktionselement verdrehsichernde Rippen und Sockel auf, so entsteht durch dessen Anbringung an einem Werkstück ein Zusammenbauteil, das sich dadurch auszeichnet, dass sowohl die Rippen als auch die Sockel sich formschlüssig im Eingriff mit dem Werkstück befinden. Mit anderen Worten erstreckt sich das Werkstück formschlüssig in den Ringraum, indem es sich um die Rippen und Sockel herum erstreckt und die Hinterschneidungen hintergreift. Darüber hinaus presst das den Stanzabschnitt umgreifende und/oder in die Hinterschneidung eingreifende Material, d. h. das Material im Bereich der Wandung der Lochung in dem Werkstück, im Wesentlichen elastisch gegen den Stanzabschnitt, wobei eine kompressive Ringspannung im Werkstückmaterial um den Stanzabschnitt herum herrscht. Der entsprechende Würgegriff zwischen dem Werkstückmaterial und dem Stanzabschnitt führt zu einem qualitativ hochwertigen Ermüdungswiderstand der Fügeverbindung.

Das Zusammenbauteil wird vorzugsweise mittels einer Matrize mit einer Ringnase derart gebildet, dass die einer dem Kopfteil des Elements abgewandte Seite des Werkstücks mit einer sich um die Stanzkante herum erstreckenden Ringvertiefung versehen ist. Diese Ringvertiefung, die durch die Ringnase der Matrize erzeugt wird, ist unter anderem dann von Bedeutung, wenn das Werkstück eine Dicke aufweist, die größer ist als die axiale Erstreckung des Stanzabschnitts. Die Vertiefung stellt dann nämlich sicher, dass das Werkstück durch den Stanzabschnitt vollständig durchstanzt wird. Beispielsweise ist der Stanzabschnitt um einen Betrag von bis zu 0,04 mm, vorzugsweise bis zu 0,02 mm kürzer als die Werkstückdicke.

Bevorzugte Ausführungsformen des erfindungsgemäßen Funktionselements bzw. des entsprechenden Zusammenbauteils gehen aus den Unteransprüchen sowie aus der noch folgenden Beschreibung von Beispielen anhand der beifügten Zeichnungen hervor. Diese zeigen:
- Fig. 1: eine Perspektivansicht einer Ausführungsform des erfindungsgemäβen Funktionselements,
- Fig. 2: eine Stirnansicht des Funktionselements gemäß Fig. 1,
- Fig. 3: eine Schnittansicht des Funktionselements gemäß Fig. 1,
- Fig. 4, 5: eine Ausführungsform eines Befestigungsprozesses zur Befestigung des Funktionselements gemäß Fig. 1 an einem Werkstück,
- Fig. 6, 7: das durch den Befestigungsprozess erhaltene Zusammenbauteil in einem Teilschnitt.

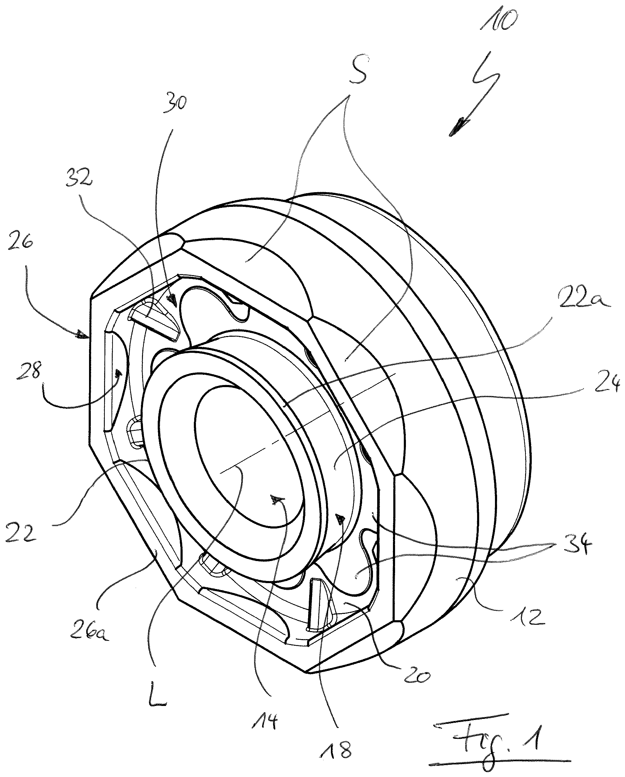

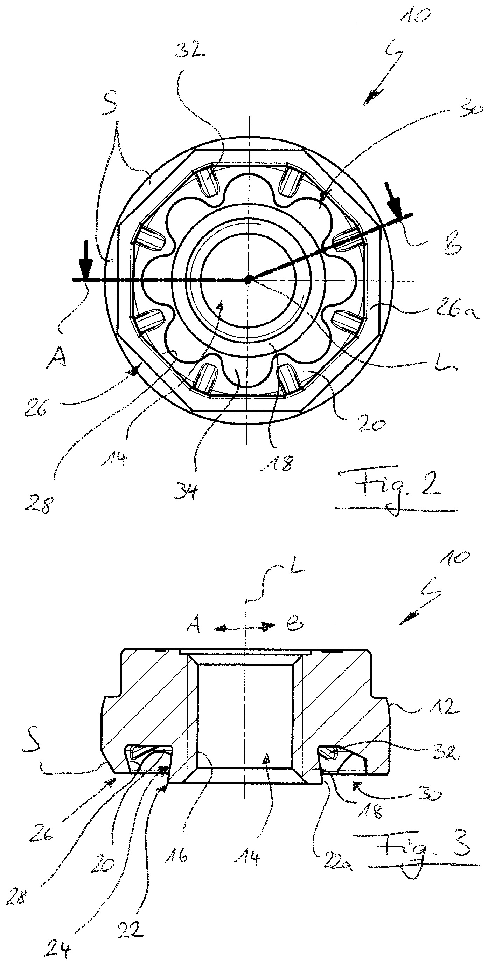

Die Fig. 1 bis 3 zeigen eine Ausführungsform eines Mutterelements 10 in einer Perspektivansicht, einer Stirnansicht bzw. in einer Schnittansicht in zwei Schnittebenen A, B, deren Lage in Fig. 2 angegeben ist. Es ist zur Befestigung an einem Blechteil vorgesehen. Das Element 10 weist einen Kopfteil 12 auf, das einen Flansch zur Anlage an einem Werkstück bildet. Es umfasst eine zentrale Bohrung 14 entlang einer Längsachse L mit einem Innengewinde 16. Anstelle der Bohrung 14 kann ein erfindungsgemäß ausgestaltetes Element auch ein Bolzenelement sein, bei dem sich ein Bolzen von dem Kopfteil 12 erstreckt.

Das Element 10 ist ein selbststanzendes Einpresselement. Seine selbststanzende Eigenschaft erhält es durch einen Stanzabschnitt 18, der sich von einer Blechanlagefläche 20 des Kopfteils 12 weg erstreckt. Der Stanzabschnitt 18 weist eine umlaufende Stanzkante 22 auf, die mit einer nachfolgend noch beschriebenen Matrize zusammenwirkt, um ein Loch in das Blechteil (oder in ein beliebiges anderes Werkstück) zu stanzen, das den Abschnitt 18 aufnimmt. Wie insbesondere der Fig. 3 zu entnehmen ist, ist eine Außenwand 24 des Abschnitts 18 nicht vollständig parallel zu der Längsachse L angeordnet. Nur ein direkt an die Stanzkante 22 angrenzender Abschnitt 22a verläuft parallel, um die Stanzkante 22 zu stabilisieren. Zwischen dem Abschnitt 22a und der Blechanlagefläche 20 ist die Außenwand 24 schräg angeordnet, so dass sie entgegen einer Einpressrichtung des Elements 10 eine Hinterschneidung bildet, durch die das Element 10 an dem Blechteil fixierbar ist. Der Rand des durch den Abschnitt 18 erzeugten Lochs hintergreift nämlich diese Hinterschneidung und sichert das Element 10 somit an dem Blechteil. Der Winkel zwischen dem geneigten Abschnitt der Außenwand 24 und der Längsachse beträgt wenige Grad, insbesondere weniger als 15°, bevorzugt weniger als 10°. Die Hinterschneidung kann bei der Herstellung des Elements 10 durch ein axiales Quetschen eines ursprünglich zylindrischen Stanzabschnitts erzeugt werden.

Um die Fixierung zu verbessern, weist das Element 10 einen in Umfangsrichtung durchgehenden Rand 26 auf, der die Anlagefläche 20 radial außenseitig begrenzt. Der Rand 26 umfasst eine dem Stanzabschnitt 18 zugewandte Innenwand 28, die zumindest abschnittsweise schräg zu der Längsachse L angeordnet ist. Die Wand 28 bildet somit abschnittsweise ebenfalls eine Hinterschneidung, die den Auspress- oder Ausziehwiderstand erhöht. Der Winkel zwischen dem geneigten Abschnitt der Innenwand 28 und der Längsachse beträgt wenige Grad. Bei der vorliegenden Ausführungsform ist der Winkel größer als jener zwischen der Innenwand 24 und der Längsachse L. Der Rand 26 weist zudem eine axiale Stirnfläche 26a auf, die parallel zu der Blechanlagefläche 20 angeordnet ist und die in einem montierten Zustand des Elements 10 auf dem Blechteil aufliegt.

Die Wände 24, 28 und die Blechanlagefläche 20 definieren einen Ringraum 30, in den bei dem Einpressen des Elements 10 Material des Blechteils gedrückt wird wodurch ein in axialer Richtung wirkender Formschluss erzeugt wird. Ein in radialer Richtung wirkender Formschluss, der das Element 10 gegen ein Verdrehen durch auf es einwirkende Drehmomente sichert, wird durch eine Reihe von Merkmalen erzeugt.

Zum einen ist die Innenwand 28 des Rands 26 nicht ringförmig sondern polygonal ausgestaltet. Diese Formgebung wird auf einfache Weise durch ein abschnittsweises Eindrücken des Rands 26 nach radial innen erreicht, der in einem Zwischenzustand während des Herstellungsprozesses des Elements 10 - ein Kaltschlagprozess - kreisförmig ist. Im vorliegenden Ausführungsbeispiel sind acht Segmente S nach innen gedrückt worden. Die Anzahl der Segmente S kann bedarfsgerecht an den jeweiligen Anwendungsfall angepasst werden. Durch die Bearbeitung des Rand 26 weist dessen Stirnfläche 26a insgesamt eine polygonale Form auf, d. h. sowohl eine Innenkante als auch eine Außenkante der Stirnfläche 26a weisen eine polygonale Kontur auf.

Zum anderen erstrecken sich Rippen 32 und Sockel 34 von der Innenwand 28 bzw. der Außenwand 24 in radialer Richtung in den Ringraum 30. Sie sind in Umfangsrichtung gleichmäßig verteilt und versetzt angeordnet. Durch ihre radiale Erstreckung von mehr als 50% der Ringraumbreite überlappen sie sich in Umfangsrichtung, so dass sich eine besonders gute Verdrehsicherungswirkung ergibt.

Die Rippen 32 stehen mit Innenwandabschnitten in Verbindung, die nicht nach radial innen geneigt sind (siehe Schnitt B in Fig. 3). Diese Abschnitte wurden bei der Herstellung nicht nach innen gedrückt, da hier benachbarte Segmente S aneinander angrenzen.

Im vorliegenden Ausführungsbeispiels ist eine Oberkante der sich von der Anlagefläche 20 erstreckenden Rippen 32 abgerundet und nach radial innen abfallend ausgestaltet. Die Rippen 32 graben sich in einem montierten Zustand des Elements 10 in das in den Ringraum 30 gepresste Material des Blechteils.

Der Sockel 34 weisen jeweils eine im Wesentlichen ebene Oberfläche auf, die parallel zu der Blechanlagefläche 20 angeordnet ist. Es ist auch vorstellbar, die Oberfläche abschnittsweise oder vollständig geneigt und/oder gekrümmt auszubilden. Die Sockel 34, die sich im Vergleich zu den Rippen 32 in axialer Richtung nur geringfügig von der Anlagefläche 20 erstrecken, bewirken insbesondere eine Verdrängung und damit vorteilhafte Verteilung des in den Ringraum 30 gepressten Materials des Werkstücks. Sie tragen daher nur zu einer Verbesserung der Verdrehsicherung, sondern auch zu einer Verbesserung der Dichtigkeit der Verbindung des Elements 10 mit dem Werkstück bei.

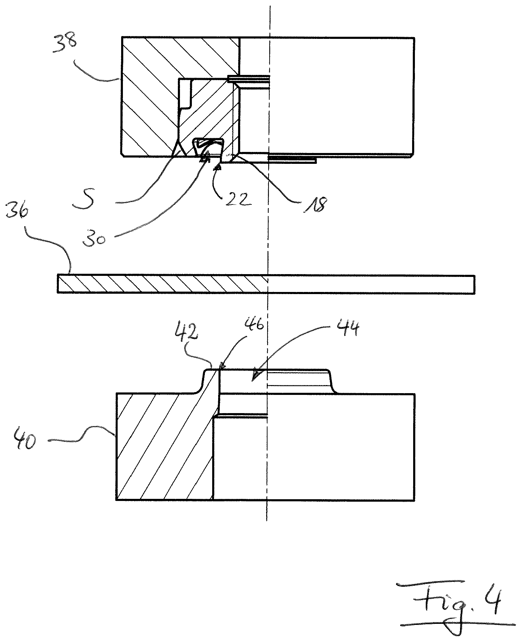

Fig. 4 zeigt den Prozess der Befestigung des Elements 10 an einem nicht vorgelochten Blechteil 36. Das Element 10 ist in einer Ausnehmung einer Setzeinrichtung 38 angeordnet. Der Stanzabschnitt 18 ragt leicht aus dieser Ausnehmung hervor. Bei der Befestigung liegt das Blechteil 36 auf einer Matrize 40 auf, die eine Ringnase 42 aufweist. Die Ringnase 42 weist eine zentrale Ausnehmung 44 auf, die durch eine Matrizenkante 46 begrenzt wird. Die Kante 46 und die Stanzkante 22 bewirken letztlich das Heraustrennen eines Butzens aus dem Blechteil 36, wenn das Element 10 durch die Setzeinrichtung 38 mit hinreichend großer Kraft gegen das Blechteil 36 gepresst wird. Der Butzen wird nach unten abgeführt.

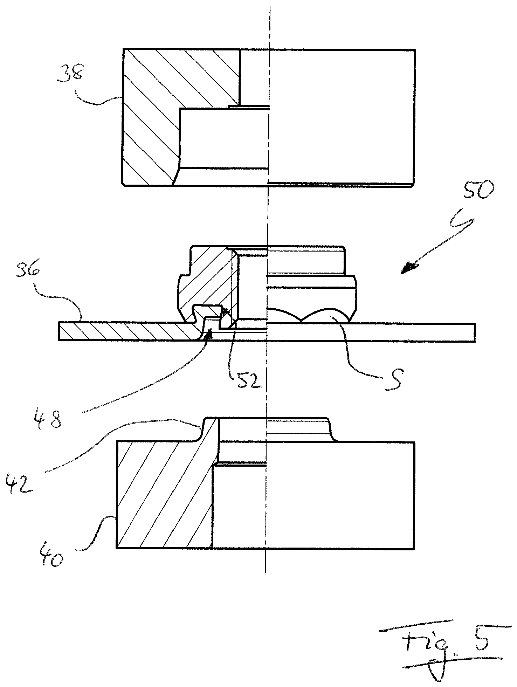

Bei dem Setzvorgang bewirkt die Ringnase 42, das das Blechteil 36 in dem Bereich um ein ausgestanztes Loch 52 in den Ringraum 30 eingepresst wird, wie in Fig. 5 gut zu sehen ist. Das Material des Blechteils 36 wird dabei hinter Hinterschneidungen der Wände 24, 28 gedrängt. Durch die in den Ringraum 30 ragenden Rippen 32 und insbesondere die Sockel 34 wird das Material des Blechteils 36 derart verteilt, dass ein zuverlässiger Formschluss zwischen dem Element 10 und dem Blechteil 36 erzeugt wird, der sowohl in axialer Richtung als auch in Umfangsrichtung des Elements 10 wirksam ist. Das Element 10 und das Blechteil 36 bilden nun ein Zusammenbauteil 50 (siehe Fig. 5).

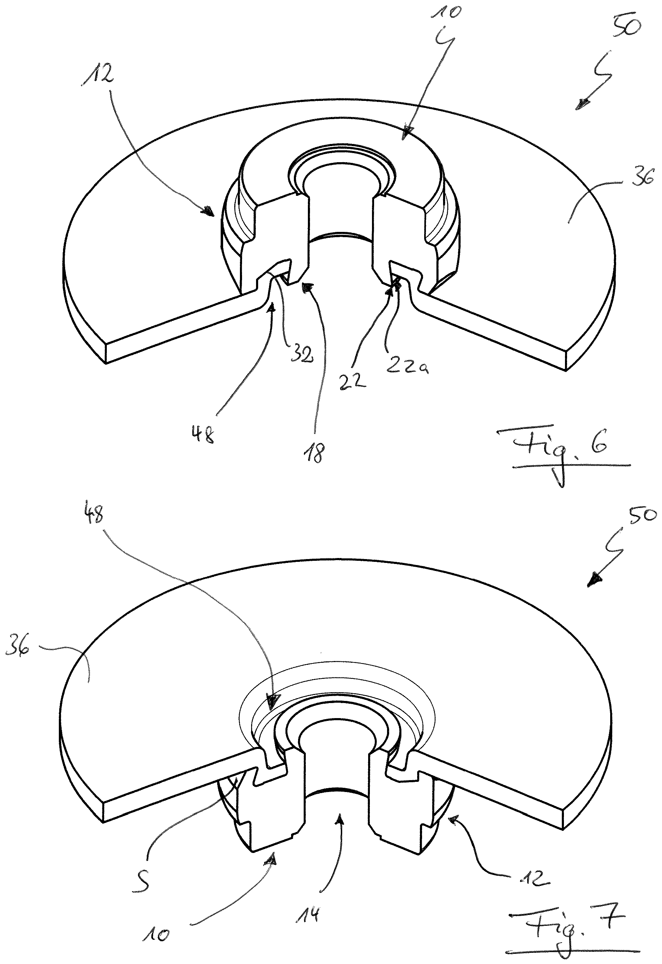

Die Fig. 6 und 7 zeigen das Zusammenbauteil 50 jeweils in einer Perspektivansicht von schräg oben bzw. schräg unten. Ein Teilsegment wurde herausgeschnitten, um den Charakter der Verbindung zwischen dem Element 10 und dem Blechteil 36 zu verdeutlichen. Der in Fig. 6 linke Teil des Schnitts verläuft durch eine Rippe 32 (wie auch bei dem Schnitt B in den Fig. 2 und 3), wodurch das Abfallen seiner Oberkante in radialer Richtung erkennbar ist.

Der Fig. 6 ist ebenfalls zu entnehmen, dass der Stanzabschnitt 18 nicht aus der erzeugten Ringvertiefung 48 ragt. Er behindert somit nicht eine eng anliegende Befestigung eines weiteren Werkstücks an dem Blechteil 36.

In Fig. 7 ist die kreisringfömige Ringvertiefung 48 zu erkennen, die durch die Ringnase 42 erzeugt wurde. Zwar ist die geometrische Grundform der Ringvertiefung 48 nicht vollständig komplementär zu der des Ringraums 30 ausgebildet, da dieser radial außenseitig durch die polygonale Innenwand 28 begrenzt wird. Durch die Verdrehsicherungsmerkmale 32, 34 und die Formgebung der Ringnase 42 wird das Material des Blechteils 36 jedoch in dem Ringraum 30 hinreichend gut verteilt.

### Bezugszeichenliste

- 10: Mutterelement
- 12: Kopfteil
- 14: Bohrung
- 16: Innengewinde
- 18: Stanzabschnitt
- 20: Blechanlagefläche
- 22: Stanzkante
- 22a: Stanzkantenabschnitt
- 24: Außenwand
- 26: Rand
- 26a: Stirnfläche
- 28: Innenwand
- 30: Ringraum
- 32: Rippe
- 34: Sockel
- 36: Blechteil
- 38: Setzeinrichtung
- 40: Matrize
- 42: Ringnase
- 44: Ausnehmung
- 46: Matrizenkante
- 48: Ringvertiefung
- 50: Zusammenbauteil
- 52: Loch

- A, B: Schnittebene
- L: Längsachse
- S: Segment

## Patentansprüche

1. Selbststanzendes Funktionselement, das zum Einstanzen in ein Werkstück (36), insbesondere in ein Blechteil, ausgelegt ist, umfassend
- ein einen Flansch bildenden Kopfteil (12) und
- einen sich von dem Kopfteil weg erstreckenden und insbesondere koaxial zu einer mittleren Längsachse (L) des Funktionselements angeordneten Stanzabschnitt (18) mit einer umlaufenden Stanzkante (22),
wobei das Kopfteil eine den Stanzabschnitt radial außenseitig zumindest abschnittsweise umgebende Anlagefläche (20) zur Anlage an dem Werkstück und eine die Anlagefläche radial außenseitig zumindest abschnittsweise begrenzenden Begrenzungsabschnitt (26) aufweist, der sich in der gleichen Richtung wie der Stanzabschnitt von der Anlagefläche weg erstreckt, und
wobei eine dem Stanzabschnitt zugewandte Innenwand (28) des Begrenzungsabschnitts und eine dem Begrenzungsabschnitt zugewandte Außenwand (24) des Stanzabschnitts zumindest abschnittsweise schräg zur Längsachse des Funktionselements angeordnet sind, so dass die Innenwand und die Außenwand in zumindest einer die Längsachse enthaltenden Ebene jeweils eine Hinterschneidung bilden,
wobei die Innenwand (28), die Anlagefläche (20) und die Außenwand (24) einen Ringraum (30) definieren,
**dadurch gekennzeichnet, dass**
sich von der Innenwand (28) in radialer Richtung zu dem Stanzabschnitt (18) hin zumindest eine Rippe (32) erstreckt, die sich in axialer Richtung von der Anlagefläche (20) weg erstreckt, wobei die axiale Erstreckung der Rippe von außen nach innen abnimmt, und dass
sich von der Außenwand (24) in radialer Richtung zu dem Begrenzungsabschnitt (26) hin zumindest ein Sockel (34) erstreckt, der sich in axialer Richtung von der Anlagefläche (20) weg erstreckt,
wobei mehrere in Umfangsrichtung gleichmäßig verteilt angeordnete Rippen (32) und Sockel (34) vorgesehen sind, die versetzt zueinander angeordnet sind, und
wobei eine radiale Erstreckung der Rippen (32) und Sockel (34) jeweils mehr als 50% der Breite des Ringraums (30) beträgt, so dass diese sich in Umfangsrichtung gesehen überlappen, und
wobei die Rippen (32) mit Abschnitten der Innenwand (28) in Verbindung stehen, die nicht nach radial innen geneigt sind.

2. Selbststanzendes Funktionselement nach Anspruch 1,
wobei die Innenwand (28) in einer axialen Stirnansicht eine polygonale Kontur aufweist.

3. Selbststanzendes Funktionselement nach einem der vorstehenden Ansprüche,
wobei der Begrenzungsabschnitt (26) eine dem Werkstück (36) zugewandte axiale Endfläche (26a) aufweist, deren Innenkante und/oder Außenkante in einer axialen Stirnansicht eine polygonale Kontur aufweisen.

4. Selbststanzendes Funktionselement nach einem der vorstehenden Ansprüche,
wobei der Begrenzungsabschnitt (26) eine dem Werkstück (36) zugewandte axiale Endfläche(26a) aufweist, deren Ebene zwischen einer durch die Anlagefläche (20) aufgespannten Ebene und einer durch die Stanzkante (22) aufgespannten Ebene liegt, insbesondere wobei die drei Ebenen parallel zueinander angeordnet sind.

5. Selbststanzendes Funktionselement nach einem der vorstehenden Ansprüche,
wobei die Stanzkante (22) und/oder die Außenwand (24) des Stanzabschnitts (18) in einer axialen Stirnansicht eine kreisförmige oder polygonale Kontur aufweisen.

6. Selbststanzendes Funktionselement nach einem der vorstehenden Ansprüche,
wobei die Außenwand (24) und/oder die Innenwand (28) und/oder die Anlagefläche (20) und/oder die axiale Endfläche (26a) mit zumindest einem Verdrehsicherungsmerkmal (32, 34) versehen sind, insbesondere mit zumindest einer sich in axialer und/radialer Richtung erstreckender Erhebungen und/oder Vertiefung.

7. Selbststanzendes Funktionselement nach einem der vorstehenden Ansprüche,
wobei das Funktionselement ein Mutterelement (10) ist, das eine Bohrung (14) mit einem Innengewinde (16) aufweist.

8. Selbststanzendes Funktionselement nach einem der Ansprüche 1 bis 6, wobei das Funktionselement ein Bolzenelement ist, das einen sich auf der dem Stanzabschnitt (18) abgewandten Seite von dem Kopfteil (12) erstreckenden Bolzenabschnitt aufweist, insbesondere wobei der Bolzenabschnitt zumindest abschnittweise mit einem Außengewinde versehen ist.

9. Zusammenbauteil umfassend ein Funktionselement (10) nach einem der vorstehenden Ansprüche und ein Werkstück (36), insbesondere ein Blechteil,
wobei das Werkstück in einem Bereich um ein durch den Stanzabschnitt (18) ausgestanztes Loch (52) zumindest teilweise in einen durch die Innenwand (28), die Anlagefläche (20) und die Außenwand (24) gebildeten Ringraum (30) und in die Hinterschneidung gedrängt ist, so dass das Funktionselement formschlüssig mit dem Werkstück verbunden ist.

10. Zusammenbauteil nach Anspruch 9,
wobei eine der Anlagefläche (20) abgewandte Seite des Werkstücks (36) in einem Bereich benachbart zu dem Loch (52) oder direkt angrenzend an das Loch mit einer Vertiefung (48), insbesondere Ringvertiefung versehen ist.

11. Zusammenbauteil nach Anspruch 9 oder 10,
wobei eine axiale Erstreckung des Stanzabschnitts (18) derart gewählt ist, dass er nicht aus der Vertiefung (48) herausragt.

12. Zusammenbauteil nach Anspruch 9, 10 oder 11,
wobei die Dicke des Werkstücks (36) im Bereich des Lochs (52) im Wesentlichen der axialen Erstreckung des Stanzabschnitts (18) entspricht oder kleiner ist.

## Claims

1. A self-punching functional element which is configured for punching into a workpiece (36), in particular into a sheet metal part, comprising
- a head part (12) forming a flange; and
- a punching section (18) which extends away from the head part, which is in particular arranged coaxially to a central longitudinal axis (L) of the functional element and which has a peripheral punching edge (22),
wherein the head part has a contact surface (20) for contact with the workpiece, said contact surface (20) at least sectionally surrounding the punching section at a radial outer side, and a boundary section (26) which at least sectionally bounds the contact surface at the radial outer side and which extends away from the contact surface in the same direction as the punching section; and
wherein an inner wall (28) of the boundary section facing the punching section and an outer wall (24) of the punching section facing the boundary section are arranged at least sectionally obliquely to the longitudinal axis of the functional element so that the inner wall and the outer wall each form an undercut in at least one plane including the longitudinal axis,
wherein the inner wall (28), the contact surface (20) and the outer wall (24) define a ring space,
**characterized in that**
at least one rib (32) extends from the inner wall (28) toward the punching section (18) in the radial direction and extends away from the contact surface (20) in the axial direction, with the axial extent of the rib decreasing from the outside to the inside, and **in that**
at least one base (34) extends from the outer wall (24) toward the boundary section (26) in the radial direction and extends away from the contact surface (20) in the axial direction,
wherein a plurality of ribs (32) and bases (34) are provided which are arranged uniformly distributed in the peripheral direction and which are arranged offset from one another, and
wherein a radial extent of the ribs (32) and the bases (34) each amounts to more than 50% of the width of the ring space (30) so that said ribs (32) and bases (34) overlap viewed in the peripheral direction, and
wherein the ribs (32) are in communication with sections of the inner wall (28) which are not inclined radially inwardly.

2. A self-punching functional element according to claim 1,
wherein the inner wall (28) has a polygonal contour in an axial end face view.

3. A self-punching functional element according to one of the preceding claims,
wherein the boundary section (26) has an axial end face (26a) which faces the workpiece (36) and whose inner edge and/or outer edge has/have a polygonal contour in an axial end face view.

4. A self-punching functional element according to any one of the preceding claims,
wherein the boundary section (26) has an axial end face (26a) which faces the workpiece (36) and whose plane is disposed between a plane spanned by the contact surface (20) and a plane spanned by the punching edge (22), in particular wherein the three planes are arranged in parallel with one another.

5. A self-punching functional element according to any one of the preceding claims,
wherein the punching edge (22) and/or the outer wall (24) of the punching section (18) has/have a circular or a polygonal contour in an axial end face view.

6. A self-punching functional element according to any one of the preceding claims,
wherein the outer wall (24) and/or the inner wall (28) and/or the contact surface (20) and/or the axial end face (26a) is/are provided with at least one feature (32, 34) providing security against rotation, in particular with at least one elevated portion and/or recess extending in an axial direction and/or a radial direction.

7. A self-punching functional element according to any one of the preceding claims,
wherein the functional element is a nut element (10) which has a bore (14) having an internal thread (16).

8. A self-punching functional element according to any one of the claims 1 to 6,
wherein the functional element is a bolt element which has a bolt section extending from the head part (12) at the side remote from the punching section (18), in particular wherein the bolt section is at least sectionally provided with an external thread.

9. A component assembly comprising a functional element (10) according to any one of the preceding claims; and a workpiece (36), in particular a sheet metal part,
wherein the workpiece is at least partly urged into a ring space (30), which is formed by the inner wall (28), the contact surface (20) and the outer wall (24), and into the undercut in a region around a hole (52) punched out by the punching section (18) so that the functional element is connected in a form-fitted manner to the workpiece.

10. A component assembly according to claim 9,
wherein a side of the workpiece (36) remote from the contact surface (20) is provided with a recess (48), in particular a ring recess, in a region adjacent to the hole (52) or directly adjacent to the hole.

11. A component assembly according to claim 9 or 10,
wherein an axial extent of the punching section (18) is selected such that it does not project from the recess (48).

12. A component assembly according to claim 9, 10 or 11,
wherein the thickness of the workpiece (36) in the region of the hole (52) substantially corresponds to or is smaller than the axial extent of the punching section (18).

## Revendications

1. Elément fonctionnel auto-poinçonneur, conçu pour être enfoncé dans une pièce à oeuvrer (36), en particulier dans une pièce en tôle, comprenant
- une partie de tête (12) formant une bride, et
- une portion de poinçonnage (18) s'étendant en éloignement de la partie de tête et disposée en particulier coaxialement à un axe longitudinal central (L) de l'élément fonctionnel et présentant une arête de poinçonnage périphérique (22),
dans lequel
la partie de tête présente une surface d'appui (20), entourant au moins localement la portion de poinçonnage radialement à l'extérieur, pour l'appui contre la pièce à oeuvrer, et une portion de délimitation (26) délimitant au moins localement la surface d'appui radialement à l'extérieur, qui s'étend en éloignement de la surface d'appui dans la même direction que la portion de poinçonnage, et
une paroi intérieure (28) de la portion de délimitation tournée vers la portion de poinçonnage et une paroi extérieure (24) de la portion de poinçonnage tournée vers la portion de délimitation sont disposées au moins localement en oblique par rapport à l'axe longitudinal de l'élément fonctionnel, de sorte que la paroi intérieure et la paroi extérieure forment une contre-dépouille respective dans au moins un plan contenant l'axe longitudinal,
la paroi intérieure (28), la surface d'appui (20) et la paroi extérieure (24) définissent un espace annulaire (30),
**caractérisé en ce que**
au moins une nervure (32) s'étend depuis la paroi intérieure (28) dans la direction radiale vers la portion de poinçonnage (18), laquelle s'étend dans la direction axiale en éloignement de la surface d'appui (20), l'extension axiale de la nervure diminuant de l'extérieur vers l'intérieur, et **en ce que** au moins un socle (34) s'étend depuis la paroi extérieure (24) dans la direction radiale vers la portion de délimitation (26), qui s'étend dans la direction axiale en éloignement de la surface d'appui (20),
plusieurs nervures (32) et plusieurs socles (34) étant prévus, qui sont disposés en étant répartis régulièrement dans la direction périphérique, et qui sont disposés de manière décalée les uns par rapport aux autres, et
une extension radiale des nervures (32) et des socles (34) s'élevant à plus de 50 % de la largeur de l'espace annulaire (30), de sorte qu'ils se chevauchent, vus en direction périphérique, et
les nervures (32) étant en liaison avec des portions de la paroi intérieure (28), qui ne sont pas inclinées radialement vers l'intérieur.

2. Elément fonctionnel auto-poinçonneur selon la revendication 1,
dans lequel la paroi intérieure (28) présente un contour polygonal dans une vue frontale axiale.

3. Elément fonctionnel auto-poinçonneur selon l'une des revendications précédentes,
dans lequel la portion de délimitation (26) présente une surface d'extrémité axiale (26a) tournée vers la pièce à oeuvrer (36), dont le bord intérieur et/ou le bord extérieur présente(nt) un contour polygonal dans une vue frontale axiale.

4. Elément fonctionnel auto-poinçonneur selon l'une des revendications précédentes,
dans lequel la portion de délimitation (26) présente une surface d'extrémité axiale (26a) tournée vers la pièce à oeuvrer (36), dont le plan est situé entre un plan défini par la surface d'appui (20) et un plan défini par l'arête de poinçonnage (22), en particulier les trois plans étant disposés parallèlement les uns aux autres.

5. Elément fonctionnel auto-poinçonneur selon l'une des revendications précédentes,
dans lequel l'arête de poinçonnage (22) et/ou la paroi extérieure (24) de la portion de poinçonnage (18) présentent un contour circulaire ou polygonal dans une vue frontale axiale.

6. Elément fonctionnel auto-poinçonneur selon l'une des revendications précédentes,
dans lequel la paroi extérieure (24) et/ou la paroi intérieure (28) et/ou la surface d'appui (20) et/ou la surface d'extrémité axiale (26a) sont pourvues d'au moins une caractéristique anti-rotation (32, 34), en particulier d'au moins un bossage et/ou renfoncement s'étendant dans la direction axiale et/ou radiale.

7. Elément fonctionnel auto-poinçonneur selon l'une des revendications précédentes,
dans lequel l'élément fonctionnel est un élément formant écrou (10) qui présente un alésage (14) muni d'un taraudage (16).

8. Elément fonctionnel auto-poinçonneur selon l'une des revendications 1 à 6, dans lequel l'élément fonctionnel est un élément formant boulon qui présente une portion de boulon s'étendant depuis la partie de tête (12) sur le côté détourné de la portion de poinçonnage (18), en particulier la portion de boulon étant pourvue au moins localement d'un filetage.

9. Pièce d'assemblage comprenant un élément fonctionnel (10) selon l'une des revendications précédentes et une pièce à oeuvrer (36), en particulier une pièce en tôle,
dans laquelle, dans une zone autour d'un trou (52) découpé par la portion de poinçonnage (18), la pièce à oeuvrer est poussée au moins partiellement jusque dans un espace annulaire (30) formé par la paroi intérieure (28), par la surface d'appui (20) et par la paroi extérieure (24), et jusque dans la contre-dépouille, de sorte que l'élément fonctionnel est relié à la pièce à ouvrer par complémentarité de formes.

10. Pièce d'assemblage selon la revendication 9,
dans laquelle une face de la pièce à oeuvrer (36) détournée de la surface d'appui (20) est pourvue d'un renfoncement (48), en particulier d'un renfoncement annulaire, dans une zone voisine du trou (52) ou directement adjacente au trou.

11. Pièce d'assemblage selon la revendication 9 ou 10,
dans laquelle une extension axiale de la portion de poinçonnage (18) est choisie de telle sorte qu'elle ne dépasse pas du renfoncement (48).

12. Pièce d'assemblage selon la revendication 9, 10 ou 11,
dans laquelle l'épaisseur de la pièce à oeuvrer (36) dans la zone du trou (52) est sensiblement égale ou inférieure à l'extension axiale de la portion de poinçonnage (18).
